# EUROPÄISCHE PATENTANMELDUNG

(11) **EP 1 270 982 A1**
(43) Veröffentlichungstag der Anmeldung: **02.01.2003**
(21) Anmeldenummer: 01810604.7
(22) Anmeldetag: 20.06.2001
(51) Int. Cl.: F16D 65/08

(54) **Bremsbacke für eine Trommelbremse**

(71) Anmelder: Schmid- Zemp, Franz, 6182 Escholzmatt (CH)
(72) Erfinder: Schmid- Zemp, Franz, 6182 Escholzmatt (CH)
(74) Vertreter: Fenner, Werner, Dipl.-Ing.

(57) **Zusammenfassung**

Bei einer Trommelbremse (1) zur Geschwindigkeitsänderung, insbesondere zur Geschwindigkeitsverzögerung eines Fahrzeuges, die aus einer antreibbaren Bremstrommel (2) und wenigstens einer etwa radial zur Bremstrommel (2) betätigbaren, die Bremstrommel (2) in eine Bremswirkung versetzbare Bremsbacke (5, 6) besteht, ist an letzterer (5, 6) ein gegen eine Reibfläche (3) der Bremstrommel (2) anpressbarer Bremsbelag (9) befestigt, der, in Drehrichtung der Bremstrommel (2) betrachtet, an wenigstens einer Endkante (10) eine grössere Länge als die kürzeste Verbindung an dieser Stelle zwischen den Seitenkanten des Bremsbelages (9) aufweist.

## Beschreibung

Die Erfindung betrifft eine Trommelbremse zur Geschwindigkeitsänderung, insbesondere zur Geschwindigkeitsverzögerung eines treibenden oder angetriebenen Fahrzeuges, anheb- und absenkbarer Lasten oder Drehwerken, mit einer antreibbaren Bremstrommel und wenigstens einer etwa radial zur Bremstrommel angeordneten, mittels Betätigungsvorrichtung die Bremstrommel in eine Bremswirkung versetzbaren Bremsbacke, an der ein gegen eine Reibfläche der Bremstrommel anpressbarer Bremsbelag befestigt ist.

Zu den eingangs genannten Fahrzeugen gehören u.a. Strassen- und Schienfahrzeuge wie beispielsweise brennstoffbetriebene Personen- oder Lastkraftwagen, fahrbare Baumaschinen aller Art, mobile Kranwagen, Anhänger, landwirtschaftliche Fahrzeuge und Arbeitsmaschinen, Triebfahrzeuge und kuppelbare Wagen auf Schienen für den Personen und Gütertransport; auch Fahrwerke von Flugzeugen, Hebezeuge wie Hallen oder Baukrane, Aufzüge sowie Drehwerke und Fahrwerke für Hebezeuge sind durch ihre mittels Trommelbremsen verzöger- und beschleunigbaren Fahr- und Umlaufeigenschaften von der Erfindung betroffen.

Unter dem Titel "Kraftfahrzeugtechnik" wird u.a. im "Dubbel", Ausgabe 16, auf Bauarten von Trommelbremsen, wie sie hier gemeint sind, hingewiesen.

Die genannten, mit Trommelbremsen ausgestatteten Fahrzeuge, Einrichtungen und Maschinen neigen beim Bremsvorgang oft zu einer ruckweisen resp. unregelmässigen Verzögerung der Geschwindigkeit, von der Mensch und Maschine störend betroffen sind.
Vielfach sind Beschädigungen und Unfälle die Folge einer in einer kritischen Situation eingeleiteten Bremsfunktion.
Ein Materialbruch an einer Trommelbremse hat meistens auch schädliche Folgeauswirkungen auf Personal und andere Teile eines Fahrzeuges. Insbesondere starke, länger andauernde Lasten bei Fahrzeugen und Maschinen belasten die Bremsen in hohem Mass.
Zusätzliche unterschätzte Einwirkungen aus der Umgebung, eine unsachgemässe Bedienung oder andere Einflüsse führen zu einer über die Sicherheitsgrenze hinausgehende Beanspruchung, die sich sehr häufig zuerst auf die betätigten Bremsen auwirkt.
Diese Situation entsteht u.a. im Einsatz landwirtschaftlicher Fahrzeuge und Arbeitsmaschinen im unwegsamen Gelände, auf abfallenden Flur-, Feld und Waldwegen und beim Befahren von Hanglagen.
Es kommt auch vor, dass eine starke Beanspruchung einer Trommelbremse zum Blockieren eines Fahrzeuges führt.

Ursache der eintretenden Schäden sind u.a. die mit ihrer in Drehrichtung einer Bremstrommel vorderen Endkante über die ganze Breite auf die Reibfläche der Bremstrommel aggressiv einwirkenden Bremsbeläge, die auf die Reibflächen eine schürfende (resp. Kerb-)Wirkung ausüben und sich selbst beschädigen, sowie durch die Verschmutzung durch Staub und andere Festteile zusätzlich einer unsachgemässen Behandlung ausgesetzt sind. Resp. es fehlen konstruktiv optimierte Bremsbacken, die eine höhere Beanspruchung ertragen oder eine grössere Effizienz ergeben.
Damit eine optimale Bremswirkung entstehen kann, muss die gesamte Oberfläche des Bremsbelages der Bremsbacken an der Reibfläche der Bremstrommel aufliegen können. Gleichzeitig ist der Verschleiss sowohl an der Reibfläche der Bremstrommel wie auch die Abnützung des Bremsbelages an den Bremsbacken für eine dauerhafte Bremswirkung zu berücksichtigen. Deshalb weist der Bremsbelag an den Bremsbacken gegenüber der Reibfläche der Bremstrommel einen grösseren Krümmungsradius resp. -bogen auf. Dadurch entsteht jedoch beim Bremsen durch die zuerst auftreffende Endkante eines Bremsbelages über dessen gesamte Breite eine auf die Reibfläche der Bremstrommel aufrauhend wirkende resp. eine Kerbwirkung hinterlassende, unzureichend verteilte Kraft. Durch diesen Umstand, der durch das vorhandene Spiel noch begünstigt wird, treten beim Bremsen plötzliche und unregelmässige Bremsverzögerungen auf, die an Mensch und Maschine zu Schäden führen können.
Oft dringt unvermeidbarer Schmutz zwischen die Reibfläche der Bremstrommel und den Bremsbelag und verursacht ein Scheuern an den reibenden Oberflächen und vielfach ist die teurere Bremstrommel davon betroffen.

Durch eine konstruktive Verbesserung der Trommelbremse lassen sich Schäden an Maschine und Mensch reduzieren.

Aufgabe der vorliegenden Erfindung ist es somit, eine Trommelbremse zu schaffen, die eine bessere Bremswirkung als bisher erzielen lässt, besser zu kontrollieren ist und die nurmehr unter normalen Verschleisserscheinungen einer gewissermassen gleitenden Reibung zwischen Reibfläche der Bremstrommel und Reibbelag der Bremsbacken leidet.

Erfindungsgemäss wird diese Aufgabe dadurch gelöst, dass wenigstens eine Endkante des Bremsbelages wenigstens partiell in einer von der Drehrichtung der Bremstrommel abweichenden Richtung beim Bremsen an der Reibfläche der Bremstrommel verläuft.
D.h., dass die Endkante des Bremsbelages in Drehrichtung der Bremstrommel betrachtet eine grössere Länge als die kürzeste Verbindung an dieser Stelle zwischen den Seitenkanten des Bremsbelages aufweist, wobei die Seitenkanten eines Bremsbelages oder einer Bremsbacke üblicherweise etwa parallel zur Drehrichtung der Bremstrommel verlaufen.
Durch diese Massnahme kann der Schmutz von der Reibfläche der Bremstrommel nach der Seite abgewiesen werden, und die bei Vorwärtsfahrt an der vorderen oder bei Rückwärtsfahrt an der hinteren Endkante auftretenden Reibkräfte, werden auf einen längeren Kantenbereich verteilt, so dass nurmehr eine geringere Wärmeentwicklung als bisher entstehen kann.
Ueberdies können durch die verlängerte Endkante des Bremsbelages die zwischen diesem und dem Belagsträger wirkenden Scherkräfte auch seitlich verteilt werden. Es tritt zwischen vorderer bzw. bei erfindungsgemäss ausgebildeter gegenüberliegender hinterer Endkante des Bremsbelages und der Reibfläche der Bremstrommel eine Gleitreibung ein, die sich schonend auf die beanspruchten Teile einer Trommelbremse auswirkt und deren Lebensdauer erheblich verbessert.

Von der erfindungsgemässen Lösung sind Trommelbremsen betroffen, die zum Zweck einer Bremsung eine innere kreisförmige Reibfläche an der Bremstrommel aufweisen, an die der Reibbelag oder die Reibbeläge einer oder mehrerer Bremsbacken angepresst wird.

Es werden aber auch Trommelbremsen mit einer solchen Bremstrommel von der erfindungsgemässen Ausführung erfasst, die zum Zweck einer Bremsung eine äussere kreisförmige Reibfläche an der Bremstrommel aufweisen, an die der Reibbelag resp. die Reibbeläge einer oder mehrerer Bremsbacken angepresst wird.

Selbstverständlich kann die erfindungsgemässe Idee auch bei Scheiben- oder Konusbremsen genutzt werden.

Vorteilhaft schliesst die Endkante des Bremsbelages mit der Drehrichtung der Bremstrommel einen spitzen Winkel α ein, wodurch eine einfache Form entsteht, an die die Bremsbacke leicht anpassbar ist.
Der Winkel α weist vernünftigerweise eine Grösse zwischen 30 und 80° auf, wobei je flacher umso spitzer die sich mit einer Längskante bildende Ecke, die bei zu spitzem Winkel auszubrechen droht, jedoch eine lange Endkante des Bremsbelages bildet.

Sind beide Endkanten eines Bremsbelages nach der erfindungsgemässen Massnahme ausgebildet, dann können die Winkel α sich gegenüberliegend oder sich diametral gegenüberliegend angeordnet sein.

Im Interesse einer optimierten Endkante bzw. Endkanten könnten diese in Drehrichtung der Bremstrommel betrachtet pfeilförmig ausgebildet sein, wobei der Pfeil an der Spitze zwischen 90 und 160° einschliessen könnte.

Alternativ kann die Endkante des Bremsbelages zu ihrer Verlängerung und einer weniger aggressiven Wirkung konkav oder konvex gekrümmt ausgebildet sein, um die Vorteile der erfindungsgemässen Lösung nutzen zu können.

Um der abgewinkelten Anordnungsweise genüge tun zu können, könnte die konkav oder konvex gekrümmte Endkante zur Drehrichtung der Bremstrommel abgewinkelt angeordnet sein.

Im Sinne der wenigstens partiellen Abweichung der Endkante von der Drehrichtung der Bremstrommel, könnte sie auch wellenförmig ausgebildet sein und dabei etwa senkrecht oder abgewinkelt zur Drehrichtung der Bremstrommel verlaufen.

Eine Massnahme gegen das Ausbrechen der spitzwinkligen Eckbereiche und für ein gleitendes Auflaufen der Reibfläche der Bremstrommel, könnte eine abgerundete Eckform sein.

Zur Begünstigung der seitlichen Abweiswirkung der Endkante gegen Verschmutzung und Verschleiss könnte diese von der Senkrechten zur Reibfläche der Bremstrommel -wie ein Schneepflug wirkend- geneigt ausgebildet sein und einen Winkel von weniger als 90° zur Reibfläche aufweisen.

Die Umrisse der Bremsbacke sind vorteilhaft an die Form des Bremsbelages -diese vorzugsweise leicht überstehend- angepasst, um eine optimale Nutzung erzielen zu können.

Anschliessend wird die Erfindung unter Bezugnahme auf die Zeichnung, auf die bezüglich aller in der Beschreibung nicht näher erwähnten Einzelheiten verwiesen wird, anhand eines Ausführungsbeispiels erläutert. In der Zeichnung zeigen:
- Fig. 1: einen Längsschnitt durch einen Achsschenkel eines Fahrzeuges und
- Fig. 2: die wichtigsten Einzelteile einer Trommelbremse in räumlicher Anordnung und Darstellung.

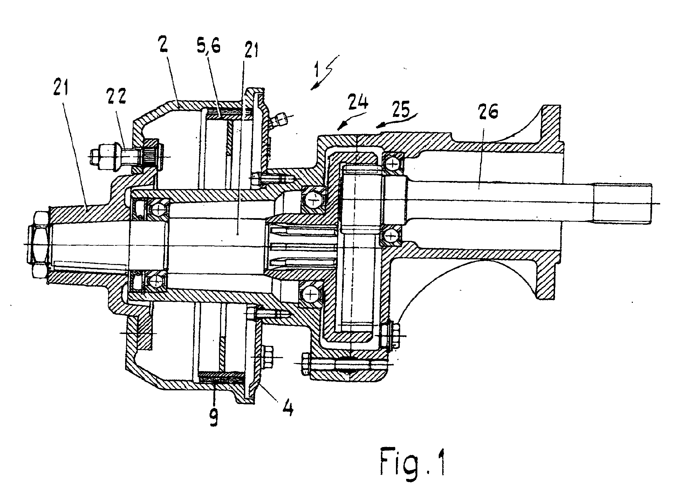

Ein in Fig. 1 im Bereich einer Trommelbremse 1 veranschaulichter Achsschenkel eines Fahrzeuges besteht aus einer an einer Radachse 21 befestigten Nabe 22 eines Rades (nicht dargestellt), das durch Schrauben 23 mit der Bremstrommel 2 verbunden ist. Die Radachse 21 ist in einem Gehäuse 24 gelagert und an dem vom Rad abgekehrten Ende über ein Differentialgetriebe 25 mit einer Antriebswelle 26 verbunden. Weiterhin ist an dem Gehäuse 24 ein Bremsträger 4 befestigt, an dem betätigbare Bremsbacken 5, 6 angeordnet sind.
Die Bremstrommel 2 weist an der Innenseite eine innere kreisrunde Reibfläche 3 auf, die den Bremsbacken 5, 6 bzw. den an diesen befestigten Bremsbelägen 9 zugewandt ist.

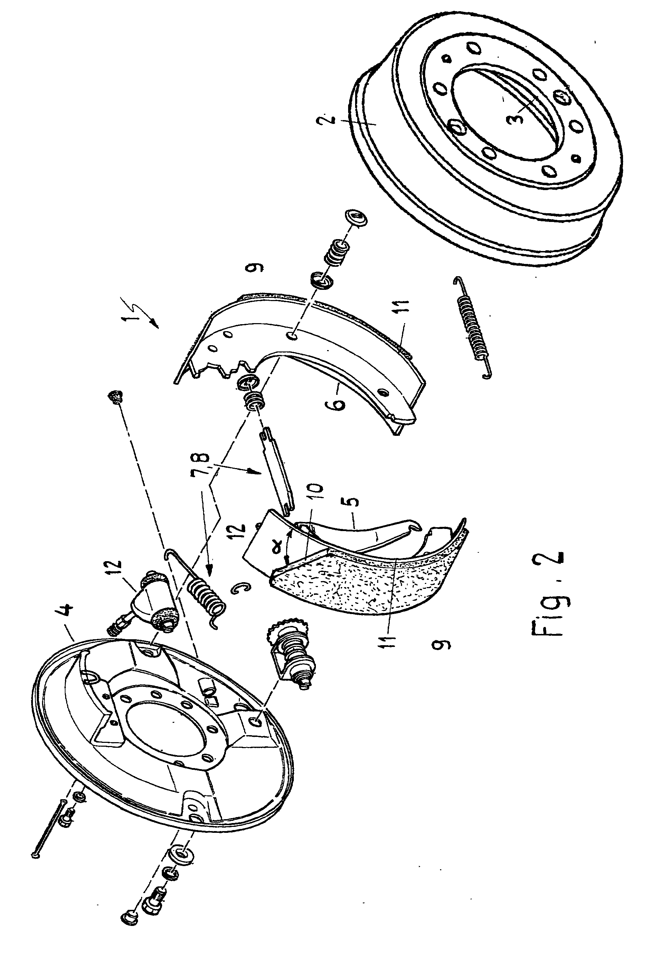

Fig. 2 zeigt die wichtigsten Einzelteile einer hydraulisch-mechanisch betätigbaren Trommelbremse 1, wie sie sich für ein kommunales bzw. landwirtschaftliches Fahrzeug eignet. Diese Trommelbremse 1 besteht aus einer mit der Nabe 22 (siehe Fig. 1) eines angetriebenen Rades (nicht ersichtlich) verbundenen Bremstrommel 2, die -gerade noch erkennbar- eine innere kreisförmige Reibfläche 3 aufweist. An einer nicht dargestellten Radaufhängung, beispielsweise einem Achsschenkel oder Tragrohr, ist ein Bremsträger 4 konzentrisch zur Radachse bzw. Bremstrommel 2 angeordnet. Am Bremsträger 4 sind zwei bewegliche Bremsbacken 5, 6 befestigt, derart, dass ihnen die innere Reibfläche 3 der Bremstrommel 2 zugewandt ist (siehe Fig. 1).
Während dem Bremsen werden die Bremsbacken 5, 6 der Trommelbremse 1 durch einen Bremszylinder 12 einer Spannvorrichtung 7, 8 gegen die innere Reibfläche 3 der Bremstrommel 2 gepresst und nach dem Bremsen durch eine Rückholvorrichtung 9 von der inneren Reibfläche 3 der Bremstrommel 2 wieder abgehoben, so dass dazwischen ein Luftspalt entsteht.
Die Spannvorrichtung 7, 8 ist am Bremsträger 4 befestigt und die Bremsbetätigung erfolgt hydraulisch-mechanisch. Sie kann auch mechanisch oder pneumatischmechanisch vorgenommen werden. Auch eine andere Kraftübertragung ist möglich, jedoch auch nicht erfindungswesentlich.
Die der Geschwindigkeitsänderung resp. -verzögerung dienende erfindungsgemässe Trommelbremse 1 für Fahrzeuge, Hub- oder Drehwerke etc. besitzt betätigbare Bremsbacken 5, 6, deren auf die Reibfläche 3 der Bremstrommel 2 einwirkenden Bremsbeläge 9 wenigstens eine Endkante 10 aufweisen, die in einer von der Drehrichtung der Bremstrommel 2 abweichenden Richtung beim Bremsen an der Reibfläche 3 der Bremstrommel 2 verläuft, wobei die Endkante 10 des auf einem Träger 11 befestigten Bremsbelages 9 absatzartig oder geneigt gegen die Reibfläche 3 gerichtet ausgebildet sein kann, jedenfalls so, dass sie selbst oder die Reibfläche 3 der Bremstrommel 2 beim Bremsvorgang keinen Schaden nehmen kann und eine Gleitreibung erzeugt, die eine Verschmutzung durch seitliches Abweisen der festen und weichen Schmutzteile oder ein Verschmieren der gegenseitig aneinander reibenden Oberflächen weitgehend verhindert.
Insbesondere bei Hub- und Drehwerken könnte anstelle einer inneren Reibfläche -wie in der Fig. 2 dargestellt- eine Bremstrommel mit einer äusseren Reibfläche für eine Trommelbremse verwendet werden.
In der Fig.2 fällt auf, dass die Endkante 10 des Bremsbelages 9 gegenüber dem Ende eines Belagsträgers 11 parallel zur Drehrichtung der Bremstrommel 2 leicht zurückversetzt angeordnet ist und mit der Drehrichtung der Bremstrommel 2 einen spitzen Winkel α von etwa 45° einschliesst.
Der Bremsbelag wird übrigens durch Nieten oder Kleben an dem vorzugsweise metallischen Belagsträger 11 befestigt.
Selbstverständlich kann der Winkel α auch grösser oder kleiner als 45° sein, um eine optimale Bremswirkung unter günstigen Bedingungen erlangen zu können. Jedenfalls ergibt eine verlängerte Endkante 10 des Bremsbelages 9 ein schonendes Zusammenwirken von Reibfläche 3 der Bremstrommel 2 und Bremsbelag 9. Die Endkante 10 des Bremsbelages 9 kann auch pfeilförmig, konkav oder konvex gekrümmt sein.
Die Endkante 10 kann zur Drehrichtung der Bremstrommel 2 senkrecht oder von der Senkrechten zur Drehrichtung um einige Grad geneigt verlaufen, so dass sie eine auf die Reibfläche 3 der Bremstrommel 2 reinigende Wirkung bzw. den anfallenden Schmutz seitlich abweisende Wirkung ausübt.
Weniger günstig ist wohl, wenn Endkante 10 und Reibfläche 3 einen Einzugsspalt bilden, der die Verschmutzung zwischen den reibenden Flächen und ein Aufrauhen begünstigt.
Zur Verlängerung der Endkante 10 könnte diese auch wellenförmig ausgebildet sein, wodurch ein Ausbrechen der Endkante weitgehend verhindert werden kann. Gegen das Ausbrechen einer Endkante 10 könnte diese mit der Seiten- bzw. Längskante des Bremsbelages 9 einen abgerundeten Uebergangsbereich aufweisen. Allgemein bezeichnet, sollte der Verlauf der Endkante 10 des Bremsbelages 9 so ausgebildet sein, dass ihr Verlauf länger ist als die kürzeste (senkrechte) Verbindung zwischen den Seitenkanten des Bremsbelages 9.
An die Form der Endkante(n) 10 des Bremsbelages 9 könnte das Ende einer Bremsbacke 5, 6 bzw. des Belagträgers 11 angepasst werden.
Die Endkante 10 des Bremsbelages 9 könnte gegenüber dem Ende des Belagträgers 11 in Drehrichtung betrachtet auch zurückversetzt angeordnet sein.

## Patentansprüche

1. Trommelbremse (1) zur Geschwindigkeitsänderung, insbesondere zur Geschwindigkeitsverzögerung eines treibenden oder angetriebenen Fahrzeuges, anheb- und absenkbarer Lasten oder Drehwerken, mit einer antreibbaren Bremstrommel (2) und wenigstens einer etwa radial zur Bremstrommel (2) angeordneten, mittels Betätigungsvorrichtung die Bremstrommel (2) in eine Bremswirkung versetzbaren Bremsbacke (5, 6), an der ein gegen eine Reibfläche (3) der Bremstrommel (2) anpressbarer Bremsbelag (9) befestigt ist, **dadurch gekennzeichnet, dass** wenigstens eine Endkante (10) des Bremsbelages (9) wenigstens partiell in einer von der Drehrichtung der Bremstrommel (2) abweichenden Richtung beim Bremsen an der Reibfläche (3) der Bremstrommel (2) verläuft.

2. Trommelbremse (1) nach Anspruch 1, mit einer Bremstrommel (2), die zum Zweck einer Bremsung eine innere kreisförmige Reibfläche (3) aufweist, an die der Reibbelag (9) der Bremsbacke (5, 6) anpressbar ist.

3. Trommelbremse (1) nach Anspruch 1, mit einer Bremstrommel (2), die zum Zweck einer Bremsung eine äussere kreisförmige Reibfläche aufweist, an die der Reibbelag der Bremsbacke anpressbar ist.

4. Trommelbremse (1) nach Anspruch 2 oder 3, **dadurch gekennzeichnet, dass** die Endkante (10) des Bremsbelages (9) mit der Drehrichtung der Bremtrommel (2) einen spitzen Winkel α einschliesst.

5. Trommelbremse (1) nach Anspruch 2 oder 3, **dadurch gekennzeichnet, dass** die Endkante (10) des Bremsbelages (9) in Drehrichtung der Bremstrommel (2) betrachtet pfeilförmig ausgebildet ist.

6. Trommelbremse (1) nach Anspruch 2 oder 3, **dadurch gekennzeichnet, dass** die Endkante (10) des Bremsbelages (9) konkav oder konvex gekrümmt ausgebildet ist.

7. Trommelbremse (1) nach Anspruch 6, **dadurch gekennzeichnet, dass** die gekrümmte Endkante (10) von der Senkrechten zur Drehrichtung der Bremstrommel (2) abgewinkelt verläuft.

8. Trommelbremse (1) nach Anspruch 2 oder 3, **dadurch gekennzeichnet, dass** die Endkante (10) des Bremsbelages (9) wellenförmig verläuft.

9. Trommelbremse (1) nach einem der Ansprüche 1 bis 8, **dadurch gekennzeichnet, dass** die Endkante (10) des Bremsbelages (9) mit den Seitenkanten einen abgerundeten Eckbereich bilden.

10. Trommelbremse (1) nach einem der Ansprüche 1 bis 9, **dadurch gekennzeichnet, dass** die Endkante (10) des Bremsbelages (9) eine von der Senkrechten zur Reibfläche (3) der Bremstrommel (2) abweichende Lage aufweist.

11. Trommelbremse (1) nach einem der Ansprüche 1 bis 10, **dadurch gekennzeichnet, dass** die Enden der Bremsbacke (5, 6) hinsichtlich Form an die Enden des Bremsbelages (9) angepasst sind.

12. Trommelbremse (1) nach einem der Ansprüche 1 bis 10, **dadurch gekennzeichnet, dass** die Endkante (10) des Bremsbelages (9) gegenüber dem Ende der Bremsbacke (5, 6) resp. Belagträgers (11) in Drehrichtung betrachtet zurückversetzt angeordnet ist.
